# EUROPEAN PATENT APPLICATION

(11) **EP 2 916 245 A1**
(43) Date of publication of application: **09.09.2015**
(21) Application number: 14789763.1
(22) Date of filing: 07.07.2014
(51) Int. Cl.: G06F 17/30

(54) **DATA PROCESSING DEVICE AND DATA PROCESSING METHOD**

(30) Priority: 22.01.2014 CN 201410030704
(71) Applicant: Huawei Technologies Co., Ltd., Longgang District Shenzhen, Guangdong 518129 (CN)
(72) Inventor: THIYAGARAJAH, Janakiraman, Shenzhen Guangdong 518129 (CN); BHATTACHARYA, Anirban, Shenzhen Guangdong 518129 (CN); LUO, Weihong, Shenzhen Guangdong 518129 (CN)
(74) Representative: Haley, Stephen
(86) International application number: PCT/CN2014/081732
(87) International publication number: WO 2015/109772

(57) **Abstract**

The present invention discloses a data processing device and a data processing method. The method includes: creating a multi-face solid graphics, displaying a first surface of the multi-face solid graphics on a predetermined area that is on a display interface, selecting a first dataset and a second dataset from a database and associating the first dataset and the second dataset respectively with two adjacent side edges of the first surface, dividing the first surface into multiple grids, and displaying query items, corresponding to each row and each column of the grids, in the two datasets; rotating the multi-face solid graphics according to a rotation instruction input by a user, so as to display a second surface on the predetermined area; re-selecting two datasets from the database and associating the two datasets respectively with two adjacent side edges of the second surface, dividing the second surface into multiple grids, and displaying query items, corresponding to each row and each column of the grids, in the two re-selected datasets, where at least one dataset of the two re-selected datasets is different from the first dataset and/or the second dataset. According to the present invention, a limitation on a size of the display interface can be broken through.

## Description

### TECHNICAL FIELD

The present invention relates to the field of information management technologies, specifically, to a data processing device, and further to a data processing method.

### BACKGROUND

When structured data in a database is analyzed, multiple datasets are often involved, and each dataset represents a dimension. If the analysis needs to be performed in different dimensions, a drop-down list manner is used in the prior art to display each dataset.

Assume that there are two datasets: one dataset is named Place that includes four query items: Building, Community, Street, and City; and the other dataset is named Report that includes four query items: Daily report, Weekly report, Monthly report, and Annual report. Then, drop-down lists are formed based on the datasets, where the query items of the Place dataset are placed in one drop-down list and the query items of the Report dataset are placed in the other drop-down list. A user may select one query item from each of the two drop-down lists so as to obtain a query result, for example, if Community is selected from one drop-down list and Monthly report is selected from the other drop-down list, specific content of a monthly report for each community can be checked.

In a long-term research, it is discovered by the present invention that the prior art has considerable limitations: on one hand, if two datasets need to be selected from three or more datasets for querying, three or more drop-down lists need to be displayed on a display interface for a user to select, but there is a limitation in a size of the display interface, so it is hard to display multiple drop-down lists at the same time; on the other hand, when there are a great number of query items in a drop-down list, there is a lack of direct visual feedback, so the user needs to perform a drop-down operation for multiple times, and therefore it is hard to select a required query item quickly and the user is inclined to have visual fatigue in a dropping-down process.

### SUMMARY

In view of this, the present invention provides a data processing device and a data processing method so as to solve a problem that there is a limitation in displaying data by using a drop-down list.

To solve the foregoing problem, a first aspect of the present invention provides a data processing device, where the device includes: a graphics management module, configured to create a multi-face solid graphics, display a first surface of the multi-face solid graphics on a predetermined area that is on a display interface, select a first dataset and a second dataset from a database and associate the first dataset and the second dataset respectively with two adjacent side edges of the first surface, divide the first surface into multiple grids, display each query item, corresponding to each row of the grids, in the first dataset, and display each query item, corresponding to each column of the grids, in the second dataset; and an instruction processing module, configured to rotate the multi-face solid graphics according to a rotation instruction input by a user, so as to display a second surface of the multi-face solid graphics on the predetermined area; where the graphics management module is further configured to, when the second surface is displayed on the predetermined area, re-select two datasets from the database and associate the two datasets respectively with two adjacent side edges of the second surface, divide the second surface into multiple grids, display each query item, corresponding to each row of the grids, in one re-selected dataset, and display each query item, corresponding to each column of the grids, in the other re-selected dataset, where at least one dataset of the two re-selected datasets is different from the first dataset and/or the second dataset.

With reference to the first aspect, in a first possible implementation manner of the first aspect, the multi-face solid graphics is a rectangular prism, and the instruction processing module is specifically configured to rotate the rectangular prism by 90 degrees around a rotation axis parallel to one of the side edges of the first surface according to the rotation instruction input by the user, so as to display the second surface, adjacent to the first surface, of the multi-face solid graphics on the predetermined area; and the graphics management module is specifically configured to, when the second surface is displayed on the predetermined area, re-select the first dataset and a third dataset from the database and associate the first dataset and the third dataset with the two adjacent side edges of the second surface, divide the second surface into multiple grids, display each query item, corresponding to each row of the grids, in the first dataset, and display each query item, corresponding to each column of the grids, in the third dataset.

With reference to the first possible implementation manner of the first aspect, in a second possible implementation manner of the first aspect, the instruction processing module is further configured to rotate the rectangular prism by 90 degrees around a rotation axis parallel to the other side edge of the first surface according to another rotation instruction input by the user, so as to display a third surface, adjacent to the second surface, of the multi-face solid graphics on the predetermined area; and the graphics management module is further configured to, when the third surface is displayed on the predetermined area, re-select the third dataset and a fourth dataset from the database and associate the third dataset and the fourth dataset with two adjacent side edges of the third surface, divide the third surface into multiple grids, display each query item, corresponding to each row of the grids, in the fourth dataset, and display each query item, corresponding to each column of the grids, in the third dataset.

With reference to the first aspect, the first possible or the second possible implementation manner of the first aspect, in a third possible implementation manner of the first aspect, where the data processing device further includes a data output module, the instruction processing module is further configured to determine a selected grid on the multi-face solid graphics according to a selection instruction input by the user, and generate a query instruction; and the data output module is configured to output a query result according to the query instruction, where the query result is determined according to a query item, at a row and a column, corresponding to the selected grid.

With reference to the third possible implementation manner of the first aspect, in a fourth possible implementation manner of the first aspect, the instruction processing module is further configured to, after the selected grid on the multi-face solid graphics is determined, display the selected grid in a manner different from a manner of another grid.

With reference to the first aspect, in a fifth possible implementation manner of the first aspect, the graphics management module is further configured to, after the first dataset and the second dataset are selected from the database and associated respectively with the two adjacent side edges of the first surface, display the first dataset and the second dataset respectively on the first side edge and the second side edge.

With reference to the first aspect, in a sixth possible implementation manner of the first aspect, the graphics generating module is further configured to, after the first surface or the second surface is divided into the multiple grids, display each of the grids with a different display effect.

To solve the foregoing problem, a second aspect of the present invention provides a data processing method, where the method includes: creating a multi-face solid graphics, displaying a first surface of the multi-face solid graphics on a predetermined area that is on a display interface, selecting a first dataset and a second dataset from a database and associating the first dataset and the second dataset respectively with two adjacent side edges of the first surface, dividing the first surface into multiple grids, displaying each query item, corresponding to each row of the grids, in the first dataset, and displaying each query item, corresponding to each column of the grids, in the second dataset; rotating the multi-face solid graphics according to a rotation instruction input by a user, so as to display a second surface of the multi-face solid graphics on the predetermined area; and when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset, where at least one dataset of the two re-selected datasets is different from the first dataset and/or the second dataset.

With reference to the second aspect, in a first possible implementation manner of the second aspect, the multi-face solid graphics is a rectangular prism, and the step of rotating the multi-face solid graphics according to a rotation instruction input by a user, so as to display a second surface of the multi-face solid graphics on the predetermined area specifically includes: rotating the rectangular prism by 90 degrees around a rotation axis parallel to one of the side edges of the first surface according to the rotation instruction input by the user, so as to display the second surface, adjacent to the first surface, of the multi-face solid graphics on the predetermined area; and the step of, when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset specifically includes: when the second surface is displayed on the predetermined area, re-selecting the first dataset and a third dataset from the database and associating the first dataset and the third dataset with the two adjacent side edges of the second surface, dividing the second surface into multiple grids, displaying each query item, corresponding to each row of the grids, in the first dataset, and display each query item, corresponding to each column of the grids, in the third dataset.

With reference to the first possible implementation manner of the second aspect, in a second possible implementation manner of the second aspect, the step of rotating the multi-face solid graphics according to a rotation instruction input by a user, so as to display a second surface of the multi-face solid graphics on the predetermined area further includes: rotating the rectangular prism by 90 degrees around a rotation axis parallel to the other side edge of the first surface according to another rotation instruction input by the user, so as to display a third surface, adjacent to the second surface, of the multi-face solid graphics on the predetermined area; and the step of, when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset further includes: when the third surface is displayed on the predetermined area, re-selecting the third dataset and a fourth dataset from the database and associating the third dataset and the fourth dataset with two adjacent side edges of the third surface, dividing the third surface into multiple grids, displaying each query item, corresponding to each row of the grids, in the fourth dataset, and display each query item, corresponding to each column of the grids, in the third dataset.

With reference to the second aspect, the first possible or the second possible implementation manner of the second aspect, in a third possible implementation manner of the second aspect, the data processing method further includes: determining a selected grid on the multi-face solid graphics according to a selection instruction input by the user, and generating a query instruction; and outputting a query result according to the query instruction, where the query result is determined according to a query item, at a row and a column, corresponding to the selected grid.

With reference to the third possible implementation manner of the second aspect, in a fourth possible implementation manner of the second aspect, after the determining a selected grid on the multi-face solid graphics, the data processing method further includes: displaying the selected grid in a manner different from a manner of another grid.

With reference to the second aspect, in a fifth possible implementation manner of the second aspect, after the selecting a first dataset and a second dataset from a database and associating the first dataset and the second dataset respectively with two adjacent side edges of the first surface, the data processing method further includes: displaying the first dataset and the second dataset respectively on the first side edge and the second side edge.

With reference to the second aspect, in a sixth possible implementation manner of the second aspect, after the dividing the first surface or the second surface into the multiple grids, the data processing method further includes: displaying each of the grids with a different display effect.

In the data processing device and the data processing method provided in the present invention, a first dataset and a second dataset are associated with two adjacent side edges of a first surface of a multi-face solid graphics, the first surface is divided into multiple grids, and query items, corresponding to each row or each column of the girds, in the two datasets are displayed on a first side edge and a second side edge respectively; when a next dataset needs to be selected, a second surface is displayed on a predetermined area by rotating the multi-face solid graphics, two datasets are re-selected from a database and associated respectively with two adjacent side edges of the second surface, the second surface is divided into multiple girds, and query items, corresponding to each row or each column of the grids, in the two datasets are displayed; and because different datasets can be selected by rotating the multi-face solid graphics, and a query item of each dataset is directly displayed on the multi-face solid graphics, the problem that there is a limitation on displaying data by using a drop-down list is solved, and a limitation on a size of a display interface can be broken through, thereby improving visual enjoyment for a user and enriching user experience.

### BRIEF DESCRIPTION OF DRAWINGS

FIG. 1 is a schematic structural diagram of a first embodiment of a data processing device according to the present invention;
FIG. 2 is a schematic diagram of a rectangular prism after the rectangular prism is created by a graphics management module in FIG. 1;
FIG. 3 is a schematic diagram after the rectangular prism is rotated for a first time by an instruction processing module in FIG. 1 according to a rotation instruction;
FIG. 4 is a schematic diagram after the rectangular prism is rotated for a second time by the instruction processing module in FIG. 1 according to a rotation instruction;
FIG. 5 is a schematic diagram after the rectangular prism is rotated for a third time by the instruction processing module in FIG. 1 according to a rotation instruction;
FIG. 6 is a schematic flowchart of a first embodiment of a data processing method according to the present invention;
FIG. 7 is a schematic flowchart of a second embodiment of a data processing method according to the present invention; and
FIG. 8 is a schematic structural diagram of a second embodiment of a data processing device according to the present invention.

### DESCRIPTION OF EMBODIMENTS

In the following description, specific details such as a specified system architecture, interface, and technology are set forth in an illustrative rather than a restrictive sense, in order to provide a thorough understanding of the present invention. However, a person skilled in the art should know that the present invention may be practiced in other embodiments without these specific details. In other instances, well-known apparatuses, circuits, and methods have not been described in detail so as not to unnecessarily obscure aspects of the present invention.

The term "and/or" in this specification describes only an association relationship between associated objects and represents that three relationships may exist. For example, A and/or B may represent the following three cases: Only A exists, both A and B exist, and only B exists.

The following description is made with reference to the accompanying drawings and specific embodiments.

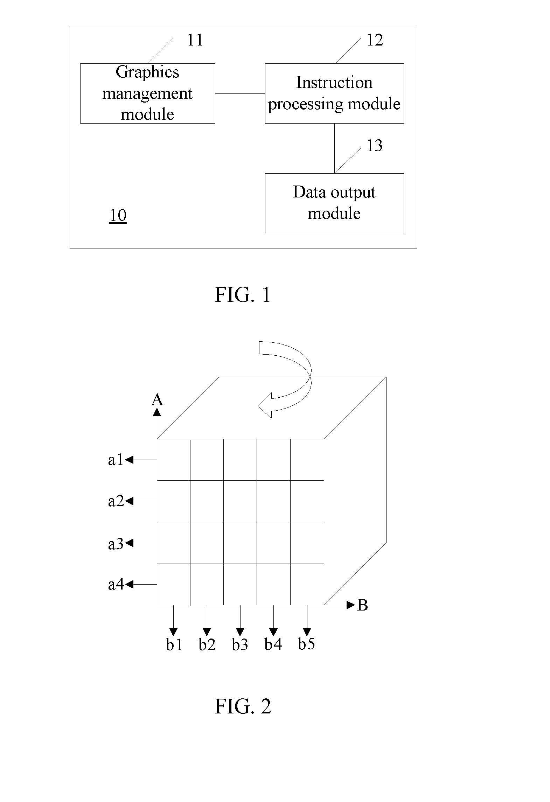

Referring to FIG. 1, FIG. 1 is a schematic structural diagram of a first embodiment of a data processing device according to the present invention. A data processing device 10 includes a graphics management module 11 and an instruction processing module 12. Optionally, a data output module 13 may further be included, and certainly, another module may further be included.

The graphics management module 11 is configured to create a multi-face solid graphics, display a first surface of the multi-face solid graphics on a predetermined area that is on a display interface, select a first dataset and a second dataset from a database and associate the first dataset and the second dataset respectively with two adjacent side edges of the first surface, divide the first surface into multiple grids, display each query item, corresponding to each row of the grids, in the first dataset, and display each query item, corresponding to each column of the grids, in the second dataset.

The multi-face solid graphics is a virtual three-dimensional graphics which may be displayed on the display interface, and when the first surface of the multi-face solid graphics is displayed, another surface may also be displayed together. When the first surface is displayed on the predetermined area, the first surface is a surface that currently needs to be acknowledged by a user. A data connection is formed between the multi-face solid graphics and the database after the first dataset and the second dataset are selected from the database and associated respectively with the two adjacent side edges of the first surface.

The number of grids divided from the first surface is preferably a product of the number of query items in the first dataset and the number of query items in the second dataset, for example, the first dataset includes four query items, the second dataset includes three query items, and therefore the first surface is divided into 12 grids; correspondingly, one of the side edges is divided into four segments, the other adjacent side edge is divided into three segments, and therefore the first surface is divided into four rows and three columns, namely, 12 grids. Each of the four query items, corresponding to each row of the grids, in the first dataset is displayed, each of the three query items, corresponding to each column of the grids, in the second dataset is displayed, and in this embodiment, when a query item is displayed, a name or a number of the query item may be displayed. Optionally, the graphics generating module 11 is further configured to, after the first dataset or the second dataset is divided into the multiple grids, display each grid with a different display effect, for example, each gird is set to a different grayscale or filled with a different background color.

The instruction processing module 12 is configured to rotate the multi-face solid graphics according to a rotation instruction input by a user, so as to display the second surface of the multi-face solid graphics on the predetermined area.

If the display interface has a touch function, the user may input the rotation instruction by performing a touch operation, for example, sliding out a predetermined slide track on the display interface; if the display interface has no touch function, the user may input the rotation instruction by using a keypad or a mouse. When the second surface is displayed on the predetermined area, the second surface is the surface that currently needs to be acknowledged by the user.

The graphics management module 11 is further configured to, when the second surface is displayed on the predetermined area, re-select two datasets from the database and associate the two datasets respectively with two adjacent side edges of the second surface, divide the second surface into multiple grids, display each query item, corresponding to each row of the grids, in one re-selected dataset, and display each query item, corresponding to each column of the grids, in the other re-selected dataset, where at least one dataset of the two re-selected datasets is different from the first dataset and/or the second dataset.

That at least one dataset of the two re-selected datasets is different from the first dataset and/or the second dataset refers to that, one dataset of the two datasets is still the first dataset or the second dataset, or neither dataset of the two datasets is the first dataset or the second dataset, in other words, at least one dataset of the two datasets is another dataset that is different from the first dataset or the second dataset.

If one dataset of the two datasets is still the first dataset or the second dataset, and the other dataset is re-selected from other datasets, the first dataset or the second dataset is associated with one of the side edges of the second surface, and the other re-selected dataset is associated with the other side edge adjacent to the one of the side edges. The second surface is divided into multiple grids, each query item, corresponding to each row of the grids, in the first dataset or the second dataset is displayed, and each query item, corresponding to each column of the grids, in the other re-selected dataset is displayed, or each query item, corresponding to each column of the grids, in the first dataset or the second dataset is displayed, and each query item, corresponding to each row of the grids, in the other re-selected dataset is displayed.

If the two datasets are both datasets re-selected from the other datasets, the two datasets are re-selected and associated respectively with the two adjacent side edges of the second surface. The second surface is divided into multiple girds, each query item, corresponding to each row of the grids, in one re-selected dataset is displayed, and each query item, corresponding to each column of the grids, in the other re-selected dataset is displayed.

It may be understood that, the multi-face solid graphics is rotated for one time once a rotation instruction is input by the user, and after each rotation, two adjacent side edges of a surface displayed on the predetermined area are associated with same or different datasets.

Optionally, the instruction processing module 12 is further configured to determine a selected grid on the multi-face solid graphics according to a selection instruction input by the user, and generate a query instruction.

After the graphics management module 11 re-divides grids, the user may find a query item focused on by the user among displayed query items that are corresponding to each row or column of the grids, thereby determining a selected grid; and the instruction processing module 12 generates the query instruction after the selected grid is determined by inputting the selection instruction. In this embodiment, after the selected grid is determined, the instruction processing module 12 displays the selected grid in a manner different from a manner of another grid, such as, highlight display or floating display.

If the display interface has a touch function, the user may input the selection instruction by performing a touch operation, for example, performing a double-tap operation at a location of the selected grid on the display interface; if the display interface has no touch function, the user may input the selection instruction by using a keypad or a mouse.

The data output module 13 is configured to output a query result according to the query instruction, where the query result is determined according to a query item, at a row and a column, corresponding to the selected grid.

The data output module 13 reads data content including two query items from the database according to the query instruction, and a diagram may be drawn according to the data content about the two query items.

Optionally, the graphics management module 11 is further configured to, after the first dataset and the second dataset are selected from the database and associated respectively with the two adjacent side edges of the first surface, display the first dataset and the second dataset respectively on a first side edge and a second side edge. In this embodiment, when a query item is displayed, a name or a number of the query item may be displayed.

The multi-face solid graphics in this embodiment is preferably a rectangular prism, and the instruction processing module 12 is specifically configured to rotate the rectangular prism by 90 degrees around a rotation axis parallel to one of the side edges of the first surface according to a rotation instruction input by the user, so as to display the second surface, adjacent to the first surface, of the multi-face solid graphics on the predetermined area. The graphics management module 11 is specifically configured to, when the second surface is displayed on the predetermined area, re-select the first dataset and a third dataset from the database and associate the first dataset and the third dataset with the two adjacent side edges of the second surface, divide the second surface into multiple grids, display each query item, corresponding to each row of the grids, in the first dataset, and display each query item, corresponding to each column of the grids, in the third dataset.

After the second dataset is replaced by the third dataset, the first dataset and the third dataset are associated with the two adjacent side edges of the second surface. Because the number of query items included in the third dataset may differ from the number of query items included in the second dataset, the second surface needs to be re-divided into multiple grids, and the number of grids divided from the second surface is preferably a product of the number of query items in the first dataset and the number of query items in the third dataset.

Further, the instruction processing module 12 is further configured to rotate the rectangular prism by 90 degrees around a rotation axis parallel to the other side edge of the first surface according to another rotation instruction input by the user, so as to display a third surface, adjacent to the second surface, of the multi-face solid graphics on the predetermined area. The graphics management module 11 is further configured to, when the third surface is displayed on the predetermined area, re-select the third dataset and a fourth dataset from the database and associate the third dataset and the fourth dataset with the two adjacent side edges of the third surface, divide the third surface into multiple grids, display each query item, corresponding to each row of the grids, in the fourth dataset, and display each query item, corresponding to each column of the grids, in the third dataset.

After the first dataset is replaced by the fourth dataset, the fourth dataset and the third dataset are associated with the two adjacent side edges of the third surface. Because the number of query items included in the fourth dataset may differ from the number of query items included in the first dataset, the third surface needs to be re-divided into multiple grids, and the number of grids divided from the third surface is preferably a product of the number of query items in the third dataset and the number of query items in the fourth dataset.

It may be understood that, a rotation instruction input by the user each time directs a different rotate direction, for example, although the user slides out a slide track each time by using the touch function, the slide direction of the slide track may be from left to right, or may be from right to left, and may also be from top to bottom or from bottom to top. Therefore, the rotate direction of the rectangular prism may also be from right to left, from right to left, from top to bottom, or from bottom to top.

The following describes a specified application scenario of the data processing device 10 according to this embodiment. Referring to FIG. 2 to FIG. 5, in this application scenario, the database includes at least a dataset A, a dataset B, a dataset C, and a dataset D, the dataset A includes query items (a1, a2, a3, and a4), the dataset B includes query items (b1, b2, b3, b4, and b5), the dataset C includes query items (c1, c2, and c3), the dataset D includes query items (d1, d2, d3, d4, d5, and d6), and the dataset A, dataset B, dataset C, and dataset D are sequenced alphabetically in the database. Assume that the user focuses on the query items in the dataset C and the dataset D.

As shown in FIG. 2, the first surface of the rectangular prism is displayed on the predetermined area that is on the display interface after the graphics generating module 11 creates the rectangular prism. The dataset A is associated with the first side edge of the first surface of the rectangular prism and is displayed on the first side edge, and the dataset B is associated with the second side edge of the first surface of the rectangular prism and is displayed on the second side edge. The second side edge connects to and is perpendicular to the second side edge. The dataset A includes four query items and the dataset B includes five query items, so the first surface is divided into four rows and five columns, that is, 20 grids are obtained by division. Each query item of the a1, a2, a3, and a4, corresponding to each row of the grids, in the dataset A is displayed along the first side edge, and each query item of the b1, b2, b3, b4, and b5, corresponding to each column of the grids, in the dataset B is displayed along the second side edge.

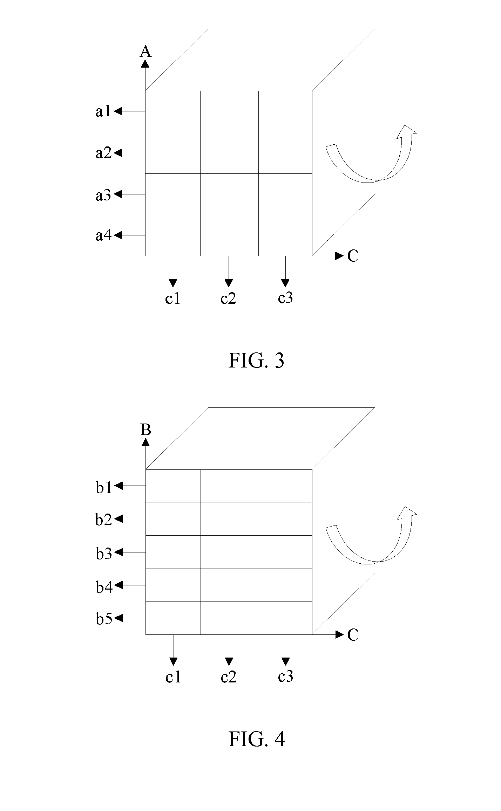

Because the dataset A and the dataset B are not datasets focused on by the user, the instruction processing module 12 rotates the rectangular prism by 90 degrees around a rotation axis parallel to the first side edge in a clockwise direction shown in FIG. 2 according to a rotation instruction input by the user; therefore, the second surface (that is, a surface on the right side of the first surface) of the rectangular prism replaces the first surface and is displayed on the predetermined area. As shown in FIG. 3, after the rectangular prism undergoes a first rotation, the graphics management module 11 associates the dataset C with a second side edge of the second surface and associates the dataset A with a first side edge of the second surface. Similarly, the dataset C is displayed on the second side edge, and the dataset A is displayed on the first side edge. The dataset C includes three query items and the dataset A includes four query items, so the second surface is re-divided into four rows and three columns, that is, 12 grids are obtained by division. Each query item of the a1, a2, a3, and a4, corresponding to each row of the grids, in the dataset A is displayed along the first side edge, and each query item of the c1, c2, and c3, corresponding to each column of the grids, in the dataset C is displayed along the second side edge.

After the first rotation, because the dataset C associated with the second side edge is exactly focused on by the user, but the dataset A is not focused on by the user, the instruction processing module 12 rotates the rectangular prism by 90 degrees around a rotation axis parallel to the second side edge in an anti-clockwise direction shown in FIG. 3 according to the rotation instruction input by the user; therefore, the third surface (that is, a surface on the upper side of the second surface) of the rectangular prism replaces the second surface and is displayed on the predetermined area. As shown in FIG. 4, after the rectangular prism undergoes a second rotation, the graphics management module 11 associates the dataset B with a first side edge of the third surface and associates the dataset C with a second side edge of the third surface. Similarly, the dataset B is displayed on the first side edge, and the dataset C is displayed on the second side edge. The dataset B includes five query items and the dataset C includes three query items, so the third surface is divided into five rows and three columns, that is, 15 grids are obtained by division. Each query item of the b1, b2, b3, b4, and b5, corresponding to each row of the grids, in the dataset B is displayed along the first side edge, and each query item of the c1, c2, and c3, corresponding to each column of the grids, in the dataset C is displayed along the second side edge.

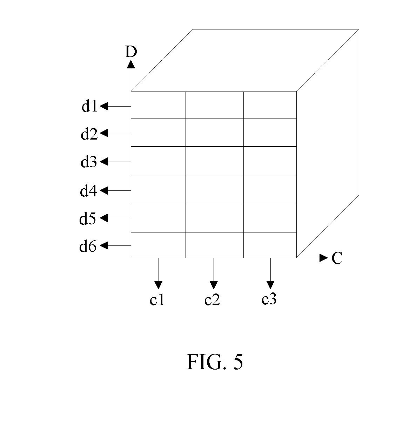

After the second rotation, because the dataset B associated with the first side edge is still not focused on by the user, the instruction processing module 12 rotates the rectangular prism by 90 degrees around the rotation axis parallel to the second side edge in an anti-clockwise direction shown in FIG. 4 according to a second rotation instruction input again by the user; therefore, a fourth surface (that is, a surface on the upper side of the third surface) of the rectangular prism replaces the third surface and is displayed on the predetermined area. As shown in FIG. 5, after the rectangular prism undergoes a third rotation, the graphics management module 11 associates the dataset D with a first side edge of the fourth surface and associates the dataset C with a second side edge of the fourth surface. Similarly, the dataset D is displayed on the first side edge, and the dataset C is displayed on the second side edge. The dataset D includes six query items and the dataset C includes three query items, so the fourth surface is re-divided into six rows and three columns, that is, 18 grids are obtained by division. Each query item of the d1, d2, d3, d4, d5 and d6, corresponding to each row of the grids, in the dataset D is displayed along the first side edge, and each query item of the c1, c2, and c3, corresponding to each column of the grids, in the dataset C is displayed along the second side edge.

After the third rotation, the dataset C and the dataset D associated to the first side edge and the second side edge of the fourth surface are exactly focused on by the user. Assume that the user needs to select the query item (c2, d4), it can be seen from a current surface that the (c2, d4) correspond to a grid that is corresponding to the fourth row and the second column. The user inputs the selection instruction, for example, single-tapping the grid by performing a touch function, so that the instruction processing module 12 displays the grid in a floating out manner for the user to acknowledge, and then, the user acknowledges the selection, for example double-tapping the gird by performing the touch function, so that the instruction processing module 12 generates the query instruction. The data output module 13 outputs the query result according to the query instruction, where the query result is determined by the query item (c2, d4), at a row and a column, corresponding to the grid. For example, if the c2 is Community and d4 is Annual report, the query result is a specific data of an annual report about each community.

It can be understood that, in the foregoing application scenario, although only 4 datasets are provided exemplarily in the database, the number of datasets in the database is not limited, for example, the database includes n datasets, n is greater than or equal to 3, a first side edge and a second side edge of a surface displayed on the predetermined area are associated respectively with the 1^{st} dataset and the 2^{nd} dataset, the rectangular prism may rotate for n-2 times around a rotation axis parallel to the first side edge in a same direction, and the dataset associated with the second side edge becomes the n^{th} dataset; in other words, as long as the rectangular prism rotates for multiple times around the rotation axis parallel to the first side edge, the dataset associated with the second side edge switches circularly from the 2^{nd} dataset to the n^{th} dataset. Similarly, the first dataset associated with the first side edge may also switch circularly between n-1 datasets excepting the second dataset.

The data processing device 10 provided in the embodiment creates a multi-face solid graphics, displays a first surface of the multi-face solid graphics on a predetermined area that is on a display interface, associates a first dataset and a second dataset in a database respectively with two adjacent side edges of the first surface, and inputs a rotation instruction to rotate the multi-face solid graphics when different datasets need to be selected, so that a second surface can be displayed on the predetermined area and the two adjacent side edges of the first surface can be re-associated with two datasets of the database, where at least one dataset of the two datasets is different from the first dataset and/or the second dataset; in addition, after the rotation, the data processing device 10 provided in the embodiment re-divides the second surface into multiple grids, and displays query items, corresponding to each row of the girds and each column of the grids, in the two re-selected datasets; and because the multi-face solid graphics can associated with multiple datasets but only needs to display two datasets, query items in the two datasets can be directly displayed on the multi-face solid graphics, and different datasets can be switched by rotation, so the problem that there is a limitation on displaying data by using a drop-down list is solved, a limitation on a size of a display interface can be broken through, thereby improving visual enjoyment of a user and enriching user experience.

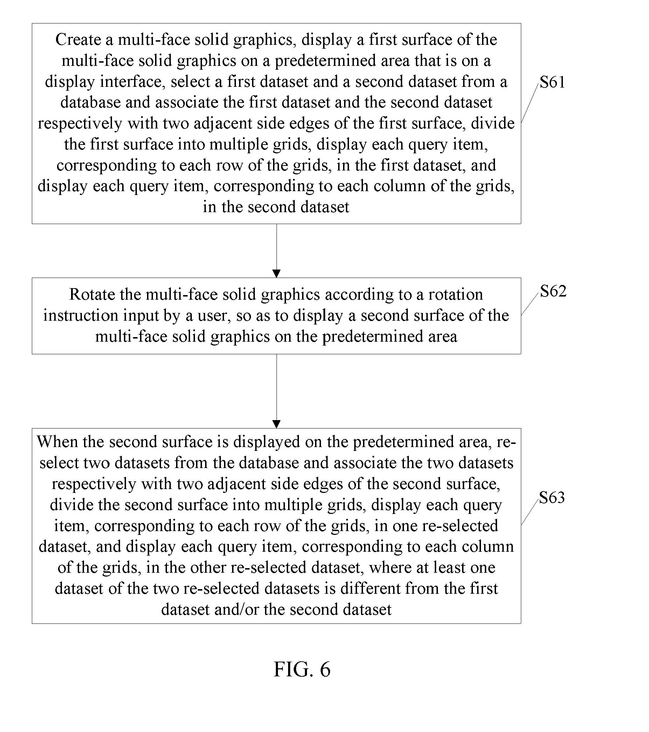

Referring to FIG. 6, FIG. 6 is a schematic flowchart of a first embodiment of a data processing method according to the present invention. The data processing method includes the following steps:

S61: Create a multi-face solid graphics, display a first surface of the multi-face solid graphics on a predetermined area that is on a display interface, select a first dataset and a second dataset from a database and associate the first dataset and the second dataset respectively with two adjacent side edges of the first surface, divide the first surface into multiple grids, display each query item, corresponding to each row of the grids, in the first dataset, and display each query item, corresponding to each column of the grids, in the second dataset.

The multi-face solid graphics is a virtual three-dimensional graphics which may be displayed on the display interface, and when the first surface of the multi-face solid graphics is displayed, another surface may also be displayed together. When the first surface is displayed on the predetermined area, the first surface is a surface that currently needs to be acknowledged by a user. A data connection is formed between the multi-face solid graphics and the database after the first dataset and the second dataset are selected from the database and associated respectively with the two adjacent side edges of the first surface.

The number of grids divided from the first surface is preferably a product of the number of query items in the first dataset and the number of query items in the second dataset, for example, the first dataset includes four query items, the second dataset includes three query items, and therefore the first surface is divided into 12 grids; correspondingly, one of the side edges is divided into four segments, the other adjacent side edge is divided into three segments, and therefore the first surface is divided into four rows and three columns, namely, 12 grids. Each of the four query items, corresponding to each row of the grids, in the first dataset is displayed, each of the three query items, corresponding to each column of the grids, in the second dataset is displayed, and in this embodiment, when a query item is displayed, a name or a number of the query item may be displayed. Optionally, after the first dataset or the second dataset is divided into the multiple grids, S61 further includes: display each grid with a different display effect, for example, each gird is set to a different grayscale or filled with a different background color.

S62: Rotate the multi-face solid graphics according to a rotation instruction input by a user, so as to display a second surface of the multi-face solid graphics on the predetermined area.

If the display interface has a touch function, the user may input the rotation instruction by performing a touch operation, for example, sliding out a predetermined slide track on the display interface; if the display interface has no touch function, the user may input the rotation instruction by using a keypad or a mouse. When the second surface is displayed on the predetermined area, the second surface is the surface that currently needs to be acknowledged by the user.

S63: When the second surface is displayed on the predetermined area, re-select two datasets from the database and associate the two datasets respectively with two adjacent side edges of the second surface, divide the second surface into multiple grids, display each query item, corresponding to each row of the grids, in one re-selected dataset, and display each query item, corresponding to each column of the grids, in the other re-selected dataset, where at least one dataset of the two re-selected datasets is different from the first dataset and/or the second dataset.

That at least one dataset of the two re-selected datasets is different from the first dataset and/or the second dataset refers to that, one dataset of the two datasets is still the first dataset or the second dataset, or neither dataset of the two datasets is the first dataset or the second dataset, in other words, at least one dataset of the two datasets is another dataset that is different from the first dataset or the second dataset.

If one dataset of the two datasets is still the first dataset or the second dataset, and the other dataset is re-selected from other datasets, the first dataset or the second dataset is associated with one of the side edges of the second surface, and the other re-selected dataset is associated with the other side edge adjacent to the one of the side edges. The second surface is divided into multiple grids, each query item, corresponding to each row of the grids, in the first dataset or the second dataset is displayed, and each query item, corresponding to each column of the grids, in the other re-selected dataset is displayed, or each query item, corresponding to each column of the grids, in the first dataset or the second dataset is displayed, and each query item, corresponding to each row of the grids, in the other re-selected dataset is displayed.

If the two datasets are both datasets re-selected from the other datasets, the two datasets are re-selected and associated respectively with the two adjacent side edges of the second surface. The second surface is divided into multiple girds, each query item, corresponding to each row of the grids, in one re-selected dataset is displayed, and each query item, corresponding to each column of the grids, in the other re-selected dataset is displayed.

It may be understood that, the multi-face solid graphics is rotated for one time once a rotation instruction is input by the user, and after each rotation, two adjacent side edges of a surface displayed on the predetermined area are associated with same or different datasets.

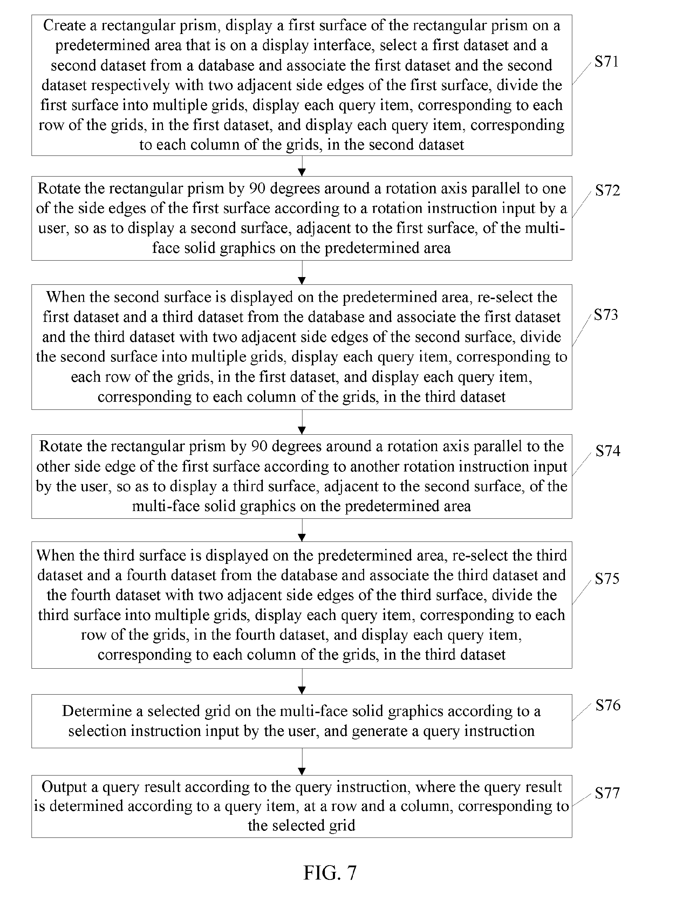

Referring to FIG. 7, FIG. 7 is a schematic flowchart of a second embodiment of a data processing method according to the present invention. The data processing method includes the following steps:

S71: Create a rectangular prism, display a first surface of the rectangular prism on a predetermined area that is on a display interface, select a first dataset and a second dataset from a database and associate the first dataset and the second dataset respectively with two adjacent side edges of the first surface, divide the first surface into multiple grids, display each query item, corresponding to each row of the grids, in the first dataset, and display each query item, corresponding to each column of the grids, in the second dataset.

The rectangular prism is a virtual three-dimensional graphics which may be displayed on the display interface, and when the first surface of the rectangular prism is displayed, another surface may also be displayed together. When the first surface is displayed on the predetermined area, the first surface is a surface that currently needs to be acknowledged by a user. A data connection is formed between the rectangular prism and the database after the first dataset and the second dataset are selected from the database and associated respectively with the two side edges adjacent to the first surface.

The number of grids divided from the first surface is preferably a product of the number of query items in the first dataset and the number of query items in the second dataset, for example, the first dataset includes four query items, the second dataset includes three query items, and therefore the first surface is divided into 12 grids; correspondingly, one of the side edges is divided into four segments, the other adjacent side edge is divided into three segments, and therefore the first surface is divided into four rows and three columns, namely, 12 grids. Each of the four query items, corresponding to each row of the grids, in the first dataset is displayed, each of the three query items, corresponding to each column of the grids, in the second dataset is displayed, and in this embodiment, when a query item is displayed, a name or a number of the query item may be displayed. Optionally, after the first dataset or the second dataset is divided into the multiple grids, S71 further includes: display each grid with a different display effect, for example, each gird is set to a different grayscale or filled with a different background color.

S72: Rotate the rectangular prism by 90 degrees around a rotation axis parallel to one of the side edges of the first surface according to a rotation instruction input by a user, so as to display a second surface, adjacent to the first surface, of the multi-face solid graphics on the predetermined area.

If the display interface has a touch function, the user may input the rotation instruction by performing a touch operation, for example, sliding out a predetermined slide track on the display interface; if the display interface has no touch function, the user may input the rotation instruction by using a keypad or a mouse. When the second surface is displayed on the predetermined area, the second surface is the surface that currently needs to be acknowledged by the user.

S73: When the second surface is displayed on the predetermined area, re-select the first dataset and a third dataset from the database and associate the first dataset and the third dataset with two adjacent side edges of the second surface, divide the second surface into multiple grids, display each query item, corresponding to each row of the grids, in the first dataset, and display each query item, corresponding to each column of the grids, in the third dataset.

After the second dataset is replaced by the third dataset, the first dataset and the third dataset are associated with the two adjacent side edges of the second surface. Because the number of query items included in the third dataset may differ from the number of query items included in the second dataset, the second surface needs to be re-divided into multiple grids, and the number of grids divided from the second surface is preferably a product of the number of query items in the first dataset and the number of query items in the third dataset.

S74: Rotate the rectangular prism by 90 degrees around a rotation axis parallel to the other side edge of the first surface according to another rotation instruction input by the user, so as to display a third surface, adjacent to the second surface, of the multi-face solid graphics on the predetermined area.

It may be understood that, a rotation instruction input by the user each time directs a different rotate direction, for example, although the user slides out a slide track each time by using the touch function, the slide direction of the slide track may be from left to right, or may be from right to left, and may also be from top to bottom or from bottom to top. Therefore, the rotate direction of the rectangular prism may also be from right to left, from right to left, from top to bottom, or from bottom to top.

S75: When the third surface is displayed on the predetermined area, re-select the third dataset and a fourth dataset from the database and associate the third dataset and the fourth dataset with two adjacent side edges of the third surface, divide the third surface into multiple grids, display each query item, corresponding to each row of the grids, in the fourth dataset, and display each query item, corresponding to each column of the grids, in the third dataset.

After the first dataset is replaced by the fourth dataset, the fourth dataset and the third dataset are associated with the two adjacent side edges of the third surface. Because the number of query items included in the fourth dataset may differ from the number of query items included in the first dataset, the third surface needs to be re-divided into multiple grids, and the number of grids divided from the third surface is preferably a product of the number of query items in the fourth dataset and the number of query items in the third dataset.

S76: Determine a selected grid on the multi-face solid graphics according to a selection instruction input by the user, and generate a query instruction.

After the re-division of the grids, the user may find a query item focused on by the user among displayed query items that are corresponding to each row or column of the grids, thereby determining a selected grid, and the query instruction is generated after the selected grid is determined by inputting the selection instruction. In this embodiment, after the selected grid is determined, the selected grid is displayed in a manner different from a manner of another grid, such as, highlight display or floating display.

If the display interface has a touch function, the user may input the selection instruction by performing a touch operation, for example, performing a double-tap operation at a location of the selected grid on the display interface; if the display interface has no touch function, the user may input the selection instruction by using a keypad or a mouse.

S77: Output a query result according to the query instruction, where the query result is determined according to a query item, at a row and a column, corresponding to the selected grid.

After data content including two query items is read from the database according to the query instruction, a diagram may be drawn according to the data content about the two query items.

Optionally, after the first dataset and the second dataset are selected from the database and associated respectively with the two adjacent side edges of the first surface, S71 further includes: display the first dataset and the second dataset respectively on a first side edge and a second side edge. In this embodiment, when a query item is displayed, a name or a number of the query item may be displayed.

According to the data processing method provided in this embodiment, a rectangular prism is created, a first surface of the rectangular prism is displayed on a predetermined area that is on a display interface, a first dataset and a second dataset in a database and associated respectively with two adjacent side edges of the first surface, and a rotation instruction is input to rotate the rectangular prism when different datasets need to be selected, so that a second surface can be displayed on the predetermined area and the two adjacent side edges of the first surface can be re-associated with two datasets of the database, where at least one dataset of the two re-selected datasets is different from the first dataset and/or the second dataset; in addition, after the rotation, the second surface is re-divided into multiple grids, and query items, corresponding to each row of the girds and each column of the grids, in the two re-selected datasets are displayed; and because the rectangular prism can associated with multiple datasets but only needs to display two datasets, query items in the two datasets can be directly displayed on the rectangular prism, and different datasets can be switched by rotation, so the problem that there is a limitation on displaying data by using a drop-down list is solved, a limitation on a size of a display interface can be broken through, thereby improving visual enjoyment of a user and enriching user experience.

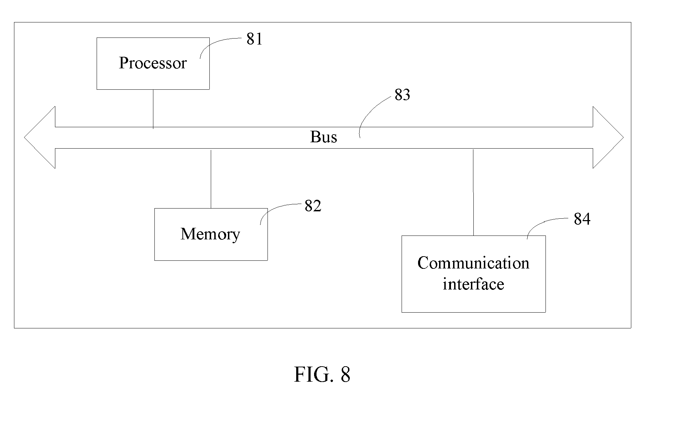

Referring to FIG. 8, FIG. 8 is a schematic structural diagram of a second embodiment of a data processing device according to the present invention. The data processing device includes a processor (processer) 81, a memory (memory) 82, a bus 83, and a communication interface (communication interface) 84. The processor 81, the memory 82 and the communication interface 84 connect to each other through the bus 83. The communication interface 84 is configured to receive an instruction input by a user.

The bus 83 may be a Peripheral Component Interconnect standard (Peripheral

Component Interconnect, PCI for short) bus, an Extended Industry Standard Architecture (Extended Industry Standard Architecture, EISA for short) bus, or the like. The bus may be divided into an address bus, a data bus, a control bus, and the like. For the convenience of representation, the bus in FIG. 8 is represented by using one piece of solid line only, but it does not mean that there is only one piece of bus or one type of bus.

The memory 82 is configured to store a program. Specifically, the program may include program code, where the program code includes a computer operation instruction. The memory 82 may include a high-speed random access memory (random access memory, RAM for short), and may also include a non-volatile memory (non-volatile memory, NVM for short), for example, at least one disk memory.

The processor 81 may be a central processing unit (central processing unit, CPU for short).

The processor 81 executes the program stored by the memory 82 to implement the data processing method provided in the embodiments of the present invention, where the method includes:
creating a multi-face solid graphics, displaying a first surface of the multi-face solid graphics on a predetermined area that is on a display interface, selecting a first dataset and a second dataset from a database and associating the first dataset and the second dataset respectively with two adjacent side edges of the first surface, dividing the first surface into multiple grids, displaying each query item, corresponding to each row of the grids, in the first dataset, and displaying each query item, corresponding to each column of the grids, in the second dataset;
rotating the multi-face solid graphics according to a rotation instruction input by a user, so as to display a second surface of the multi-face solid graphics on the predetermined area; and
when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset, where at least one dataset of the two re-selected datasets is different from the first dataset and/or the second dataset.

Operationally, the multi-face solid graphics is a rectangular prism, and the step of rotating the multi-face solid graphics according to a rotation instruction input by a user, so as to display a second surface of the multi-face solid graphics on the predetermined area specifically includes: rotating the rectangular prism by 90 degrees around a rotation axis parallel to one of the side edges of the first surface according to the rotation instruction input by the user, so as to display the second surface, adjacent to the first surface, of the multi-face solid graphics on the predetermined area. When the second surface is displayed on the predetermined area, the step of re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset specifically includes: when the second surface is displayed on the predetermined area, re-selecting the first dataset and a third dataset from the database and associating the first dataset and the third dataset with the two adjacent side edges of the second surface, dividing the second surface into multiple grids, displaying each query item, corresponding to each row of the grids, in the first dataset, and display each query item, corresponding to each column of the grids, in the third dataset.

Operationally, the step of rotating the multi-face solid graphics according to a rotation instruction input by a user, so as to display a second surface of the multi-face solid graphics on the predetermined area further includes: rotating the rectangular prism by 90 degrees around a rotation axis parallel to the other side edge of the first surface according to another rotation instruction input by the user, so as to display a third surface, adjacent to the second surface, of the multi-face solid graphics on the predetermined area. when the second surface is displayed on the predetermined area, the step of re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset further includes: when the third surface is displayed on the predetermined area, re-selecting the third dataset and a fourth dataset from the database and associating the third dataset and the fourth dataset with two adjacent side edges of the third surface, dividing the third surface into multiple grids, displaying each query item, corresponding to each row of the grids, in the fourth dataset, and display each query item, corresponding to each column of the grids, in the third dataset.

Optionally, the method further includes: determining a selected grid on the multi-face solid graphics according to a selection instruction input by the user, and generating a query instruction; and outputting a query result according to the query instruction, where the query result is determined according to a query item, at a row and a column, corresponding to the selected grid.

Optionally, after the determining a selected grid on the multi-face solid graphics, the method further includes: displaying the selected grid in a manner different from a manner of another grid.

Optionally, after the selecting a first dataset and a second dataset from a database and associating the first dataset and the second dataset respectively with two adjacent side edges of the first surface, the method further includes: displaying the first dataset and the second dataset respectively on a first side edge and a second side edge.

Optionally, after the dividing the first surface or the second surface into the multiple grids, the method further includes: displaying each of the grids with a different display effect.

For a specific implementation process of the processor 81, reference is made to the data processing device 10 and the data processing method according to the embodiments described above, which is not described in detail herein.

In the several embodiments provided in the present invention, it should be understood that the disclosed system, apparatus, and method may be implemented in other manners. For example, the described apparatus embodiment is merely exemplary. For example, the module or unit division is merely logical function division and may be other division in an actual implementation. For example, a plurality of units or components may be combined or integrated into another system, or some features may be ignored or not performed. Further, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor (processor) to perform all or a part of the steps of the methods described in the embodiments of the present invention. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely embodiments of the present invention, and the protection scope of the present invention is not limited thereto. All equivalent structure or process changes made according to the content of this specification and accompanying drawings in the present invention or by directly or indirectly applying the present invention in other related technical fields shall fall within the protection scope of the present invention.

## Claims

1. A data processing device, comprising:
a graphics management module, configured to create a multi-face solid graphics, display a first surface of the multi-face solid graphics on a predetermined area that is on a display interface, select a first dataset and a second dataset from a database and associate the first dataset and the second dataset respectively with two adjacent side edges of the first surface, divide the first surface into multiple grids, display each query item, corresponding to each row of the grids, in the first dataset, and display each query item, corresponding to each column of the grids, in the second dataset; and
an instruction processing module, configured to rotate the multi-face solid graphics according to a rotation instruction input by a user, so as to display a second surface of the multi-face solid graphics on the predetermined area; wherein
the graphics management module is further configured to, when the second surface is displayed on the predetermined area, re-select two datasets from the database and associate the two datasets respectively with two adjacent side edges of the second surface, divide the second surface into multiple grids, display each query item, corresponding to each row of the grids, in one re-selected dataset, and display each query item, corresponding to each column of the grids, in the other re-selected dataset, wherein at least one dataset of the two re-selected datasets is different from the first dataset and/or the second dataset.

2. The data processing device according to claim 1, wherein the multi-face solid graphics is a rectangular prism, and the instruction processing module is specifically configured to rotate the rectangular prism by 90 degrees around a rotation axis parallel to one of the side edges of the first surface according to the rotation instruction input by the user, so as to display the second surface, adjacent to the first surface, of the multi-face solid graphics on the predetermined area; and
the graphics management module is specifically configured to, when the second surface is displayed on the predetermined area, re-select the first dataset and a third dataset from the database and associate the first dataset and the third dataset with the two adjacent side edges of the second surface, divide the second surface into multiple grids, display each query item, corresponding to each row of the grids, in the first dataset, and display each query item, corresponding to each column of the grids, in the third dataset.

3. The data processing device according to claim 2, wherein the instruction processing module is further configured to rotate the rectangular prism by 90 degrees around a rotation axis parallel to the other side edge of the first surface according to another rotation instruction input by the user, so as to display a third surface, adjacent to the second surface, of the multi-face solid graphics on the predetermined area; and
the graphics management module is further configured to, when the third surface is displayed on the predetermined area, re-select the third dataset and a fourth dataset from the database and associate the third dataset and the fourth dataset with two adjacent side edges of the third surface, divide the third surface into multiple grids, display each query item, corresponding to each row of the grids, in the fourth dataset, and display each query item, corresponding to each column of the grids, in the third dataset.

4. The data processing device according to any one of claims 1 to 3, wherein the data processing device further comprises a data output module,
the instruction processing module is further configured to determine a selected grid on the multi-face solid graphics according to a selection instruction input by the user, and generate a query instruction; and
the data output module is configured to output a query result according to the query instruction, wherein the query result is determined according to a query item, at a row and a column, corresponding to the selected grid.

5. The data processing device according to claim 4, wherein the instruction processing module is further configured to, after the selected grid on the multi-face solid graphics is determined, display the selected grid in a manner different from a manner of another grid.

6. The data processing device according to claim 1, wherein the graphics management module is further configured to, after the first dataset and the second dataset are selected from the database and associated respectively with the two adjacent side edges of the first surface, display the first dataset and the second dataset respectively on the first side edge and the second side edge.

7. The data processing device according to claim 1 wherein the graphics generating module is further configured to, after the first surface or the second surface is divided into the multiple grids, display each of the grids with a different display effect.

8. A data processing method, comprising:
creating a multi-face solid graphics, displaying a first surface of the multi-face solid graphics on a predetermined area that is on a display interface, selecting a first dataset and a second dataset from a database and associating the first dataset and the second dataset respectively with two adjacent side edges of the first surface, dividing the first surface into multiple grids, displaying each query item, corresponding to each row of the grids, in the first dataset, and displaying each query item, corresponding to each column of the grids, in the second dataset;
rotating the multi-face solid graphics according to a rotation instruction input by a user, so as to display a second surface of the multi-face solid graphics on the predetermined area; and
when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset, wherein at least one dataset of the two re-selected datasets is different from the first dataset and/or the second dataset.

9. The data processing method according to claim 8, wherein the multi-face solid graphics is a rectangular prism, and the step of rotating the multi-face solid graphics according to a rotation instruction input by a user, so as to display a second surface of the multi-face solid graphics on the predetermined area specifically comprises:
rotating the rectangular prism by 90 degrees around a rotation axis parallel to one of the side edges of the first surface according to the rotation instruction input by the user, so as to display the second surface, adjacent to the first surface, of the multi-face solid graphics on the predetermined area; and
the step of, when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset specifically comprises:
when the second surface is displayed on the predetermined area, re-selecting the first dataset and a third dataset from the database and associating the first dataset and the third dataset with the two adjacent side edges of the second surface, dividing the second surface into multiple grids, displaying each query item, corresponding to each row of the grids, in the first dataset, and display each query item, corresponding to each column of the grids, in the third dataset.

10. The data processing method according to claim 9, wherein the step of rotating the multi-face solid graphics according to a rotation instruction input by a user, so as to display a second surface of the multi-face solid graphics on the predetermined area further comprises:
rotating the rectangular prism by 90 degrees around a rotation axis parallel to the other side edge of the first surface according to another rotation instruction input by the user, so as to display a third surface, adjacent to the second surface, of the multi-face solid graphics on the predetermined area; and
the step of, when the second surface is displayed on the predetermined area, re-selecting two datasets from the database and associating the two datasets respectively with two adjacent side edges of the second surface, dividing the second surface into multiple grids, displaying each query item, corresponding to each row of the grids, in one re-selected dataset, and displaying each query item, corresponding to each column of the grids, in the other re-selected dataset further comprises:
when the third surface is displayed on the predetermined area, re-selecting the third dataset and a fourth dataset from the database and associating the third dataset and the fourth dataset with two adjacent side edges of the third surface, dividing the third surface into multiple grids, displaying each query item, corresponding to each row of the grids, in the fourth dataset, and display each query item, corresponding to each column of the grids, in the third dataset.

11. The data processing method according to any one of claims 8 to 10, wherein the data processing method further comprises:
determining a selected grid on the multi-face solid graphics according to a selection instruction input by the user, and generating a query instruction; and
outputting a query result according to the query instruction, wherein the query result is determined according to a query item, at a row and a column, corresponding to the selected grid.

12. The data processing method according to claim 11, wherein after the determining a selected grid on the multi-face solid graphics, the data processing method further comprises:
displaying the selected grid in a manner different from a manner of another grid.

13. The data processing method according to claim 8, wherein after the selecting a first dataset and a second dataset from a database and associating the first dataset and the second dataset respectively with two adjacent side edges of the first surface, the data processing method further comprises: displaying the first dataset and the second dataset respectively on the first side edge and the second side edge.

14. The data processing method according to claim 8, wherein after the dividing the first surface or the second surface into the multiple grids, the data processing method further comprises: displaying each of the grids with a different display effect.
